# EUROPÄISCHE PATENTSCHRIFT

(11) **EP 4 194 110 B1**
(45) Veröffentlichungstag und Bekanntmachung des Hinweises auf die Patenterteilung: **25.03.2026**
(21) Anmeldenummer: 22211314.4
(22) Anmeldetag: 05.12.2022
(51) Int. Cl.: B07C 5/36, B07C 5/342

(54) **VERFAHREN ZUM ENTFERNEN EINES STÜCKGUTES VON EINEM FÖRDERMITTEL, ABBLASEINRICHTUNG UND SORTIERSYSTEM**
METHOD FOR REMOVING AN ARTICLE FROM A CONVEYING MEANS, BLOW-OFF DEVICE AND SORTING SYSTEM
PROCÉDÉ POUR ENLEVER UNE MARCHANDISE DE DÉTAIL D'UN MOYEN DE TRANSPORT, DISPOSITIF DE SOUFFLAGE ET SYSTÈME DE TRI

(30) Priorität: 07.12.2021 DE 102021132204
(43) Veröffentlichungstag der Anmeldung: 14.06.2023
(73) Patentinhaber: Deutsche Post AG, 53113 Bonn (DE)
(72) Erfinder: KOCAK, Nureddin Kerim, 61184 Karben (DE); BAYRAKTAR, Fatih, 63526 Erlensee (DE)
(74) Vertreter: Michalski Hüttermann & Partner Patentanwälte mbB

(56) Entgegenhaltungen:
- EP-A1- 3 566 982
- DE-A1- 102018 213 680

## Beschreibung

### Technisches Gebiet

Die Erfindung betrifft ein Verfahren zum Entfernen eines Stückgutes von einem Fördermittel eines Sortiersystems, wobei das Sortiersystem das Fördermittel zum Fördern des Stückgutes in eine Transportrichtung entlang einer Förderstrecke umfasst, und wobei das Fördermittel derart ausgestaltet ist, dass ein in einem Zellenbereich auf dem Fördermittel angeordnetes Stückgut senkrecht zu der Transportrichtung bewegbar ist.

Zudem betrifft die Erfindung eine Abblaseinrichtung zum Entfernen eines Stückgutes von einem Fördermittel eines Sortiersystems.

Weiterhin betrifft die Erfindung ein Sortiersystem zum Sortieren von Stückgütern umfassend ein Fördermittel zum Fördern des Stückgutes in eine Transportrichtung entlang einer Förderstrecke und die obige Abblaseinrichtung.

### Hintergrund der Erfindung

Sortiersysteme, die Stückgüter auf Basis des Zustellungszieles des Stückgutes mittels eines Fördermittels auf verschiedene Endstellen sortieren sind im Stand der Technik bekannt. Beispielsweise sind die Endstellen entlang einer Förderstrecke des Fördermittels angeordnet und das Fördermittel ist derart ausgestaltet, dass ein in einem Zellenbereich auf dem Fördermittel angeordnetes Stückgut senkrecht zu der Transportrichtung des Fördermittels bewegbar ist. Entsprechend kann das Stückgut bei Erreichen der entsprechenden Endstelle senkrecht zur Transportrichtung in die entsprechende Endstelle befördert werden.

Beispielsweise werden in Sortierzentren Quergurtsorter eingesetzt, die mehrere rechtwinklig zur Transportrichtung des Sorters angebrachte kurze Gurtförderer umfassen. Die Gurtförderer, die die jeweiligen Zellenbereiche definieren, können einzeln oder zu mehreren an Fahrwagen des Förderers montiert sein. Durch Bewegung des Quergurtes können die Stückgüter beim Ein- und/oder Ausschleusen vom Fördermittel aufgenommen bzw. ausgegeben werden.

Eine Problematik bei solchen Fördermitteln ist, dass Stückgüter, die nicht im Zellenbereich auf dem Fördermittel angeordnet sind, auch nicht in die entsprechende Endstelle befördert werden können. Beispielsweise können sich kleine, leichte und/oder unförmige Stückgüter beim Einschleusen verschieben oder die Stückgüter rollen und/oder kippen während des Transportes auf dem Fördermittel. Derart kann es vorkommen, dass die Stückgüter nicht vollständig oder nicht mehr vollständig im Zellenbereich des Fördermittels angeordnet sind. Stückgüter, die nicht vollständig im Zellenbereich auf dem Fördermittel angeordnet sind, und entsprechend auch nicht durch das Fördermittel in eine Endstelle befördert werden können und derart vom Fördermittel entfernt werden können, weisen ein hohes Risiko auf, verloren zu gehen, verzögern den Versand und verringern die Kapazität des Fördermittels. Insbesondere Stückgüter, die zwischen zwei Zellenbereichen angeordnet sind, blockieren durch ihre Lage nicht nur einen Zellenbereich, sondern auch den benachbarten Zellenbereich. Beispielsweise blockieren Stückgüter, die auf einer Abdeckung zwischen zwei Quergurten angeordnet sind, beide Quergurte. Diese Problematik führt zu einer drastischen Reduzierung der Kapazität des Fördermittels. Zudem müssen die fehlplatzierten Stückgüter beim Stillstehen des Fördermittels von Mitarbeitern manuell entfernt werden, was nicht nur aufwändig ist, sondern durch den Stillstand des Fördermittels zu weiteren Verzögerungen, Kapazitätseinschränkungen und zusätzlichen Kosten führt.

Das Dokument US 2019 / 0 321 860 A1 bzw. EP 3 566 982 A1 beschreibt eine Sortiervorrichtung zum Sortieren von Artikeln, wobei die Sortiervorrichtung eine stationär angeordnete Entfernungsvorrichtung zum Bewegen eines ausgewählten Artikels herunter von einem Förderer der Sortiervorrichtung an einer vordefinierten Entnahmeposition umfasst, wobei die Entnahmevorrichtung ein Stützelement umfasst, wobei das Stützelement entlang einer sich parallel zum Förderweg erstreckenden Längsrichtung bewegbar ist, wobei eine erste Antriebseinrichtung angepasst ist, das Stützelement mit einer Geschwindigkeit und in eine Querposition zu bewegen, die einem ausgewählten Artikel entspricht, wobei die Entfernungsvorrichtung ferner ein Schubelement umfasst, das von dem Stützelement getragen wird, und wobei ein zweites Antriebsmittel angepasst ist, das Schubelement in der Querrichtung zu bewegen, um den Artikel von dem Förderer zu entfernen.

Das Dokument DE 10 2018 009 974 B3 beschreibt einen Querfördersorter mit einer Abräumvorrichtung zum Entfernen von deplatziertem Stückgut, wobei die Abräumvorrichtung eine auf einer ersten Seite neben einer Förderbahn des Querfördersorters angeordnete Abblasevorrichtung ist.

### Beschreibung der Erfindung

Ausgehend von dieser Situation ist es eine Aufgabe der vorliegenden Erfindung, Maßnahmen bereitzustellen, die die durch fehlplatzierte Stückgüter hervorgerufenen Kapazitätseinbußen verringern. Insbesondere ist es Aufgabe der Erfindung, Maßnahmen bereitzustellen, die fehlplatzierte Stückgüter auch bei laufendem Fördermittel vom Fördermittel entfernen können.

Die Aufgabe der Erfindung wird durch die Merkmale der unabhängigen Ansprüche gelöst. Vorteilhafte Ausgestaltungen sind in den Unteransprüchen angegeben.

Demnach wird die Aufgabe gelöst durch ein Verfahren zum Entfernen eines Stückgutes von einem Fördermittel eines Sortiersystems, wobei das Sortiersystem das Fördermittel zum Fördern des Stückgutes in eine Transportrichtung entlang einer als Rundstrecke ausgestalteten Förderstrecke umfasst, und wobei das Fördermittel derart ausgestaltet ist, dass ein in einem Zellenbereich auf dem Fördermittel angeordnetes Stückgut senkrecht zu der Transportrichtung bewegbar ist, umfassend die Schritte
- Erzeugen von Bilddaten mittels einer an der Förderstrecke angeordneten Kamera, wobei die Bilddaten wenigstens das Fördermittel in einem Abschnitt der Förderstrecke repräsentieren,
- Erkennen eines nicht vollständig im Zellenbereich auf dem Fördermittel platzierten Stückgutes auf Basis der erzeugten Bilddaten mittels einer Steuerung,
- Klassifizieren des nicht vollständig im Zellenbereich auf dem Fördermittel platzierten Stückgutes hinsichtlich einer Eigenschaft des Stückgutes, insbesondere einer Form, einer Lage, einer Dimension, eines Verpackungsmaterials, einer Oberflächenbeschaffenheit, und/oder eines Gewichts, auf Basis der erzeugten Bilddaten mittels der Steuerung,
- Erzeugen eines Abblasbefehls für eine an der Förderstrecke angeordnete Abblasvorrichtung,
- Abblasen des nicht vollständig im Zellenbereich auf dem Fördermittel platzierten Stückgutes auf Basis des Abblasbefehls mittels der Abblasvorrichtung,
- Überprüfen des Abblasens mittels einer Lichtschranke nach dem Abblasen, und
- Empfangen eines von der Lichtschranke erzeugten Überprüfungssignals,
wobei der Abblasbefehl unter Berücksichtigung eines Zeitpunkts des Erzeugens der Bilddaten, einer Fördergeschwindigkeit des Fördermittels, einer Anordnung der Kamera, der Förderstrecke und der Abblasvorrichtung zueinander und unter Berücksichtigung des Überprüfungssignals und der Klassifikation des Stückgutes mittels maschinellen Lernens erzeugt wird.

Weiterhin wird die Aufgabe durch eine Abblaseinrichtung zum Entfernen eines Stückgutes von einem Fördermittel eines Sortiersystems gelöst, wobei das Fördermittel zum Fördern des Stückgutes in eine Transportrichtung entlang einer Förderstrecke ausgestaltet ist und das Fördermittel weiterhin derart ausgestaltet ist, dass ein in einem Zellenbereich auf dem Fördermittel angeordnetes Stückgut senkrecht zu der Transportrichtung bewegbar ist, wobei die Abblaseinrichtung eine Kamera, eine Steuerung, eine Lichtschranke und eine Abblasvorrichtung umfasst, und wobei die Abblaseinrichtung dazu eingerichtet ist, das obige Verfahren durchzuführen.

Zudem wird die Aufgabe durch ein Sortiersystem zum Sortieren von Stückgütern umfassend ein Fördermittel zum Fördern des Stückgutes in eine Transportrichtung entlang einer Förderstrecke und die obige Abblaseinrichtung gelöst.

Ein Aspekt der Erfindung ist, dass zum Entfernen der fehlplatzierten Stückgüter - sprich derjenigen Stückgüter, die nicht vollständig in dem Zellenbereich auf dem Fördermittel angeordnet sind - die Abblasvorrichtung verwendet wird. Die Abblasvorrichtung entfernt das fehlplatzierte Stückgut berührungslos durch Abblasen, so dass zum Entfernen des Stückgutes das Fördermittel nicht stillstehen muss. Entsprechend können fehlplatzierte Stückgüter im laufenden Betrieb des Fördermittels entfernt werden. Zudem hat das berührungslose Entfernen von Stückgütern auch den Vorteil, dass es zum Betrieb keine Sicherheitsvorkehrungen wie beispielsweise Einzäunungen oder Mitarbeiterschulungen bedarf. Außerdem kann das berührungslose Entfernen mittels Druckluft auch bei hohen Fördergeschwindigkeiten des Fördermittels durchgeführt werden, ohne dass befürchtet werden muss, dass die Stückgüter beschädigt werden, wie dies bei einem mechanischen Entfernen der Stückgüter der Fall wäre.

Zudem ermöglicht das Verfahren, die Abblaseinrichtung und/oder das Sortiersystem ein automatisiertes Entfernen der fehlplatzierten Stückgüter. Durch die Erkennung der fehlplatzierten Stückgüter auf Basis der Bilddaten, das Erzeugen des Abblasbefehls für die Abblasvorrichtung und das Abblasen der Stückgüter auf Basis des Abblasbefehls ist also eine potentielle Gefährdung von Mitarbeitenden durch das Erkennen und/oder Entfernen von fehlplatzierten Stückgütern von vorherein ausgeschlossen. Dies erhöht die Arbeitssicherheit und senkt die Kosten.

Ein weiterer Aspekt der Erfindung ist, dass fehlplatzierte Stückgüter auf Basis der von der Kamera erzeugten Bilddaten erkannt werden und/oder dass eine Kamera zum Überwachen eines Abschnittes der Förderstrecke verwendet wird. Dies führt zu einer sehr hohen Erkennungsquote von fehlplatzierten Stückgütern und/oder dazu, dass fehlplatzierte Stückgüter sehr gut von nicht fehlplatzierten Stückgütern unterschieden werden können. Entsprechend wird ermöglicht, dass auch nur diejenigen Stückgüter durch Abblasen von dem Fördermittel entfernt werden, die durch ihre Lage ein oder mehrere Zellenbereiche blockieren und/oder die nicht durch das Fördermittel in ihre entsprechenden Endstellen transportiert werden können. Das genaue Erkennen von fehlplatzierten Stückgütern führt also dazu, dass unnötige Abblasungen reduziert werden, was eine Lärmbelästigung durch das Abblasen reduziert und zudem Kapazitätseinbußen durch unnötiges Entfernen verringert.

Da Bilddaten zudem nicht nur Rückschlüsse darüber erlauben, ob ein Stückgut vollständig im Zellenbereich angeordnet ist oder nicht, sondern auch ermöglichen Rückschlüsse auf eine Form des Stückgutes, eine Lage des Stückgutes, eine Dimension des Stückgutes, ein Verpackungsmaterial des Stückgutes, eine Oberflächenbeschaffenheit des Stückgutes, ein Gewicht des Stückgutes und/oder weitere Eigenschaften des Stückgutes zu ziehen, kann der Abblasbefehl zielgerichtet und individuell für das Stückgut erzeugt werden. Derart wird also ein präzises Abblasen ermöglicht, das einerseits zu einer hohen Abblasquote führt - also dazu führt, dass bei möglichst vielen als fehlplatzierte Stückgüter erkannten Stückgütern das Entfernen vom Fördermittel durch Abblasen auch erfolgreich ist - und andererseits auch ermöglicht, eine Lärmbelästigung durch ein unpräzises und/oder unnötiges Abblasen zu reduzieren. In anderen Worten führt die Kamera bzw. das Erzeugen der Bilddaten also dazu, dass der Abblasvorgang besonders präzise durchgeführt werden kann.

Zudem ermöglichen die Bilddaten auch eine statistische Auswertung dahingehend, welche Eigenschaften von Stückgütern besonders oft zu einer Fehlplatzierung führen und/oder welche Zellenbereiche des Förderermittels wie oft mit fehlplatzierten Stückgütern belastet sind. Entsprechend können Kapazitätseinbußen am Sortiersystem verringert werden. Insbesondere ermöglichen die Bilddaten in Kombination mit dem Überprüfungssignal, dass die Steuerung selbständig Muster und/oder Gesetzmäßigkeiten in den Bilddaten erkennt, die mit einer erfolgreichen bzw. erfolglosen Abblasung in Zusammenhang stehen. Derart kann der Abblasbefehl selbständig mittels maschinellen Lernens angepasst werden.

Ein weiterer Aspekt der Erfindung ist, dass die Förderstrecke als Rundstrecke, bei der die Stückgüter im Kreis geführt werden, ausgestaltet ist. Dies ermöglicht, dass eine nicht erfolgreiche Abblasung dazu führt, dass bei der nächsten Abblasung der Abblasbefehl angepasst wird. Beispielsweise können beim nächsten Durchgang des zuvor nicht erfolgreich abgeblasenen Stückgutes eine Blasdauer und/oder ein Blaszeitpunkt angepasst werden. Bevorzugt empfängt die Steuerung das Überprüfungssignal.

In einem ersten Schritt des Verfahrens werden mittels der an der Förderstrecke angeordneten Kamera die Bilddaten erzeugt. Die Kamera ist also dazu ausgestaltet und bevorzugt derart an der Förderstrecke angeordnet, dass Bilddaten erzeugt werden, die wenigstens das Fördermittel in einem bestimmten Abschnitt der Förderstrecke repräsentieren. Bei den Bilddaten handelt es sich bevorzugt um eine zeitliche Abfolge von einzelnen Standbildern. Die Standbilder können beispielsweise mit einer vordefinierten und/oder unveränderlichen Bildwiederholrate erzeugt werden. Alternativ können die Standbilder auch mit einer veränderlichen Bildwiederholrate erzeugt werden, beispielsweise auf Basis eines Triggers und/oder angepasst an eine aktuelle Fördergeschwindigkeit des Fördermittels. Die Bildwiederholrate der Bilddaten ist bevorzugt an die Fördergeschwindigkeit des Fördermittels derart angepasst, dass wenigstens die von dem Fördermittel transportierten Stückgütern, jeweils von wenigstens einem Standbild der Bilddaten repräsentiert werden. Weiter bevorzugt repräsentiert jedes Standbild wenigstens das Fördermittel in dem Abschnitt der Förderstrecke. In anderen Worten können nebst dem Fördermittel also auch noch weitere Bestandteile des Sortiersystems von den Bilddaten repräsentiert werden. Zudem ist die Kamera bevorzugt derart angeordnet, dass der auf den Bilddaten abgebildete Abschnitt der Förderstecke bevorzugt derart groß ist, dass wenigstens ein von dem Fördermittel transportiertes Stückgut vollständig von einem Standbild der Bilddaten repräsentiert wird.

In einem weiteren Schritt des Verfahrens wird ein nicht vollständig im Zellenbereich auf dem Fördermittel platziertes Stückgut auf Basis der erzeugten Bilddaten mittels der Steuerung erkannt. Bevorzugt werden also die Bilddaten zur Auswertung an die Steuerung gesendet. Bevorzugt erkennt die Steuerung fehlplatzierte Stückgüter mittels eines Bilderkennungs- und/oder Kantenerkennungsalgorithmus. In anderen Worten ist also die Steuerung bevorzugt dazu ausgestaltet, auf Basis der erzeugten Bilddaten ein nicht vollständig im Zellenbereich auf dem Fördermittel platziertes Stückgut zu erkennen. Bevorzugt umfasst das Erkennen des nicht vollständig im Zellenbereich auf dem Fördermittel platzierten Stückgutes auf Basis der erzeugten Bilddaten, ein Erkennen eines Zwischenzellenbereichs auf Basis der erzeugten Bilddaten und ein anschließendes Überprüfen mittels der Steuerung, ob sich ein Stückgut in dem Zwischenzellenbereich befindet. Der Zwischenzellenbereich ist bevorzugt jener Bereich des Fördermittels, der sich zwischen zwei benachbarten Zellenbereichen befindet.

In einem weiteren Schritt des Verfahrens wird ein Abblasbefehl erzeugt. Besonders bevorzugt wird in dem Fall, dass von der Steuerung auf Basis der Bilddaten ein nicht vollständig im Zellenbereich platziertes Stückgut erkannt wird, der Abblasbefehl erzeugt.

Weiterhin wird beim Erzeugen des Abblasbefehls der Zeitpunkt des Erzeugens der Bilddaten, die Fördergeschwindigkeit des Fördermittels, und einer Anordnung der Kamera, der Förderstrecke und der Abblasvorrichtung zueinander berücksichtigt.

In Bezug zum Zeitpunkt des Erzeugens der Bilddaten kann vorgesehen sein, dass die Bilddaten mit einem Zeitstempel versehen sind.

In Bezug zur Fördergeschwindigkeit des Fördermittels kann vorgesehen sein, dass das Verfahren den Schritt Bestimmen der Fördergeschwindigkeit des Fördermittels auf Basis der Bilddaten umfasst. Beispielsweise kann auf Basis der Bildwiederholrate und der Bilddaten die Fördergeschwindigkeit ermittelt werden. Alternativ oder zusätzlich kann die Fördergeschwindigkeit als Soll-Wert oder als Ist-Wert zur Verfügung gestellt werden.

Beispielsweise kann die Steuerung nach Erkennen eines fehlplatzierten Stückgutes ein Signal, beispielsweise ein digitales Signal, erzeugen. Dieses Signal kann beispielsweise unter Berücksichtigung des Zeitpunkts des Erzeugens der Bilddaten, der Fördergeschwindigkeit des Fördermittels, und der Anordnung der Kamera, der Förderstrecke und der Abblasvorrichtung zueinander, von der Steuerung in Form des Abblasbefehls erzeugt werden. Alternativ kann das Signal unter Berücksichtigung des Zeitpunkts des Erzeugens der Bilddaten, der Fördergeschwindigkeit des Fördermittels, und der Anordnung der Kamera, der Förderstrecke und der Abblasvorrichtung zueinander, von der Steuerung und/oder von einer weiteren Steuerung in den beispielsweise als analoges Schaltsignal ausgestalteten Abblasbefehl umgewandelt werden. In anderen Worten ist also die Steuerung und/oder die weitere Steuerung dazu ausgestaltet, den Abblasbefehl für die Abblasvorrichtung unter Berücksichtigung des Zeitpunkts des Erzeugens der Bilddaten, der Fördergeschwindigkeit des Fördermittels, und der Anordnung der Kamera, der Förderstrecke und der Abblasvorrichtung zueinander zu erzeugen.

In einem weiteren Schritt des Verfahrens wird das nicht vollständig im Zellenbereich auf dem Fördermittel platzierte Stückgut auf Basis des Abblasbefehls mittels der Abblasvorrichtung abgeblasen. Bevorzugt wird also der Abblasbefehl an die Abblasvorrichtung gesendet, die entsprechend des Abblasbefehls die Abblasung durchführt. Bevorzugt ist die Abblasvorrichtung dazu ausgestaltet, auf Basis des Abblasbefehls, das nicht vollständig im Zellenbereich auf dem Fördermittel platzierte Stückgut mittels Abblasens vom Fördermittel zu entfernen.

Die Abblaseinrichtung zum Entfernen des Stückgutes von dem Fördermittel des Sortiersystems umfasst die Kamera, die Steuerung und die Abblasvorrichtung, wobei die Abblaseinrichtung dazu eingerichtet ist, das oben beschriebene Verfahren durchzuführen. Die Abblaseinrichtung kann grundsätzlich unabhängig von dem Sortiersystem betrieben werden. Alternativ kann das Sortiersystem Informationen an die Steuerung der Abblaseinrichtung senden, die bevorzugt von der Steuerung und/oder der weiteren Steuerung beim Erzeugen des Abblasbefehls berücksichtigt werden, wie nachfolgend noch detaillierter ausgeführt wird.

Das Sortiersystem umfasst das Fördermittel zum Fördern des Stückgutes in die Transportrichtung entlang der Förderstrecke, wobei das Fördermittel derart ausgestaltet ist, dass ein in dem Zellenbereich auf dem Fördermittel angeordnetes Stückgut senkrecht zu der Transportrichtung bewegbar ist. Bevorzugt ist das Fördermittel aus Quergurtsorter ausgestaltet.

Weiter bevorzugt umfasst das Sortiersystem eine an der Förderstrecke angeordnete Einschleusvorrichtung zum Beladen des Fördermittels mit den Stückgütern, und/oder eine an der Förderstrecke angeordnete Ausschleusvorrichtung umfassend eine Mehrzahl an Endstellen, zum Ausschleusen der Stückgüter auf entsprechende Endstellen.

Weiter bevorzugt kann in Bezug zum Sortiersystem vorgesehen sein, dass das Sortiersystem eine an der Förderstrecke angeordnete Beladekontrollvorrichtung zum Bestimmen einer Lage des im Zellenbereich auf dem Fördermittel angeordneten Stückgutes umfasst und/oder einen an der Förderstrecke angeordneten Scanner zum Bestimmen der Endstelle des im Zellenbereich auf dem Fördermittel angeordneten Stückgutes. Beispielsweise ist der Scanner in Transportrichtung hinter der Beladekontrollvorrichtung angeordnet, wobei die Beladekontrollvorrichtung die Lage des im Zellenbereich auf dem Fördermittel angeordneten Stückgutes ermittelt und der Scanner auf Basis der ermittelten Lage eine die Endstelle bestimmende Adresse und/oder einen die Endstelle bestimmenden Code erfasst. Das Anordnen des Scanners in einem sehr kurzen Abstand in Transportrichtung direkt hinter der Beladekontrollvorrichtung vermindert die Wahrscheinlichkeit, dass sich das Stückgut zwischen Erfassen der Lage im Zellenbereich mittels der Beladekontrollvorrichtung und Erfassen der die Endstelle bestimmenden Adresse und/oder des die Endstelle bestimmenden Codes verschiebt, da derart die Zeit bis das Stückgut von der Beladekontrolle zum Scanner transportiert wird, verringert ist. Ein Verschieben des Stückgutes würde das Erfassen der die Endstelle bestimmenden Adresse und/oder des die Endstelle bestimmenden Codes mittels des Scanners erschweren. Weiter bevorzugt ist die Ausschleusvorrichtung dazu ausgestaltet, auf Basis der durch den Scanner bestimmten Endstelle das Stückgut auf die entsprechende Endstelle auszuschleusen.

Gemäß einer bevorzugten Weiterbildung der Erfindung ist bezüglich der Anordnung der Kamera, der Förderstrecke und der Abblasvorrichtung zueinander vorgesehen, dass die Abblasvorrichtung in Transportrichtung derart hinter der Kamera angeordnet ist, dass zwischen dem von den Bilddaten repräsentierten Abschnitt der Förderstrecke, und einem Abblasort der Förderstrecke eine Transportzeit durch das Fördermittel von 0,2 Sekunden bis 3 Sekunden liegt, wobei der Abblasort, demjenigen Ort der Förderstrecke entspricht, an dem die Abblasvorrichtung das nicht vollständig im Zellenbereich auf dem Fördermittel platzierte Stückgut abbläst. Besonders bevorzugt ist die Anordnung derart, dass die Transportzeit 1 Sekunde ± 30 % beträgt. Weiter bevorzugt ist vorgesehen, dass die Anordnung der Kamera, der Förderstrecke und der Abblasvorrichtung zueinander derart ist, dass die oben definierte Transportzeit durch das Fördermittel nicht kleiner ist als eine Schaltzeit und/oder Reaktionszeit der Abblaseinrichtung und insbesondere der Kamera und/oder der Abblasvorrichtung. Die obigen Werte für die Transportzeit haben sich als besonders geeignet herausgestellt. Eine zu geringe Transportzeit erschwert ein rechtzeitiges und somit erfolgreiches Abblasen durch die Abblasvorrichtung. Eine zu große Transportzeit zwischen dem von den Bilddaten repräsentierten Abschnitt der Förderstrecke und dem Abblasort, erschwert allerdings ein erfolgreiches Abblasen fehlplatzierter Stückgüter. Beispielsweise erhöht sich die Wahrscheinlichkeit, dass sich zwischen dem Abschnitt der Förderstrecke, in dem das Stückgut von der Kamera erfasst wird, und dem Abblasort das Stückgut auf dem Fördermittel verschiebt, je länger die Transportzeit dazwischen ist. Entsprechend ist bevorzugt vorgesehen, dass die Transportzeit zwischen dem von den Bilddaten repräsentierten Abschnitt der Förderstrecke, und dem Abblasort nicht mehr als 3 Sekunden beträgt. Bei einer typischen Fördergeschwindigkeit des Fördermittels von 2 m/s sind der von der Kamera erfasste Abschnitt und der Abblasort also bevorzugt nicht mehr als 6 Meter entlang der Förderstrecke voneinander entfernt.

In Bezug zur Anordnung ist gemäß einer weiteren bevorzugten Weiterbildung der Erfindung vorgesehen, dass die Kamera derart an der Förderstrecke angeordnet ist, dass die von der Kamera erzeugten Bilddaten das Fördermittel von oben repräsentieren. In anderen Worten ist die Kamera also bevorzugt nicht seitlich der Förderstecke angeordnet, sondern bevorzugt oberhalb der Förderstrecke, so dass die Kamera den Abschnitt der Förderstrecke und das Fördermittel von oben erfasst. Dies erleichtert das Erkennen von fehlplatzierten Stückgütern auf dem Fördermittel. Weiterhin werden auf diese Art der Anordnung auch das durch die Bilddaten ermöglichte Bestimmen der Form des Stückgutes, der Lage des Stückgutes, der Dimension des Stückgutes, des Verpackungsmaterials des Stückgutes, der Oberflächenbeschaffenheit des Stückgutes, des Gewicht des Stückgutes und/oder von weiteren Eigenschaften des Stückgutes vereinfacht.

Hinsichtlich der Anordnung der Abblasvorrichtung ist gemäß einer weiteren Weiterbildung der Erfindung vorgesehen, dass die Abblasvorrichtung derart an der Förderstrecke angeordnet ist, dass ein von der Abblasvorrichtung erzeugter Druckluftstoß senkrecht zur Transportrichtung des Fördermittels gerichtet ist und/oder in einer Ebene parallel zu einer Förderebene des Fördermittels liegt. Die Abblasvorrichtung erzeugt also bevorzugt den Druckluftstoß in eine Richtung die senkrecht zur Transportrichtung gerichtet ist. Derart lässt sich das Stückgut auf kürzestem Weg von dem Fördermittel abblasen. Weiterhin ist der Druckluftstoß bevorzugt in der Ebene parallel zur Förderebne des Fördermittels, was ebenfalls eine effiziente Abblasung des Stückgutes erlaubt. Beide Maßnahmen ermöglichen zudem die Abblasung zielgerichtet auf das Stückgut zu richten, da derart die Strecke, die der Druckluftstoß von der Düse zum Stückgut zurücklegen muss gering ist und entsprechend dazu beigetragen wird, dass eine Lärmemission durch das Abblasen geringgehalten werden kann.

Gemäß einer weiteren bevorzugten Weiterbildung der Erfindung ist bevorzugt vorgesehen, dass der Abblasbefehl wenigstens einen Blaszeitpunkt und eine Blasdauer umfasst, und dass der Schritt des Abblasens ein Erzeugen wenigstens eines Druckluftstoßes für die Blasdauer zu dem Blaszeitpunkt mittels der Abblasvorrichtung umfasst. Die Steuerung und/oder die weitere Steuerung erzeugt also bevorzugt einen Abblasbefehl dahingehend, dass eine Blasdauer des Druckluftstoßes und ein Blaszeitpunkt des Druckluftstoßes festgelegt werden. Die Abblasvorrichtung führt anschließend unter Berücksichtigung des Abblasbefehls umfassend die Blasdauer und den Blaszeitpunkt die Abblasung durch.

Die Abblasvorrichtung umfasst bevorzugt eine oder mehrere bevorzugt mit Magnetventilen ausgerüstete Druckluftdüsen. Bevorzugt werden die Magnetventile über eine Druckluftanlage mit Druckluft versorgt, weiter bevorzugt bei einem Betriebsdruck von 6 bar ± 20 %. Das Magnetventil öffnet sich bevorzugt gemäß dem Abblasbefehl und lässt die Druckluft für die durch den Abblasbefehl bestimmte Blasdauer durch die Druckluftdüse passieren. Bevorzugt komprimiert die Druckluftdüse den Volumenstrom der Druckluft.

Wie bereits erwähnt, ermöglichen die Bilddaten eine gezielte Abblasung des Stückgutes. In diesem Zusammenhang ist gemäß einer bevorzugten Weiterbildung der Erfindung vorgesehen, dass das Verfahren den Schritt Bestimmen einer Dimension des nicht vollständig im Zellenbereich auf dem Fördermittel platzierten Stückgutes parallel zur Transportrichtung umfasst, und wobei der Abblasbefehl, bevorzugt die Blasdauer, unter Berücksichtigung der bestimmten Dimension erzeugt wird. Unter Dimension des Stückgutes parallel zur Transportrichtung ist bevorzugt bei einem auf dem Fördermittel platzierten Stückgut die Erstreckung des Stückgutes parallel zur Förderstrecke gemeint. Diese Dimension bedingt bevorzugt auch wie lange das Stückgut sich aufgrund des Transportes entlang der Transportrichtung vor der Druckluftdüse der Abblasvorrichtung befindet. Entsprechend kann der Abblasbefehl, und insbesondere die Blasdauer, an die bestimmte Dimension angepasst werden. Bevorzugt führen Stückgüter mit einer großen Erstreckung parallel zur Transportrichtung zu einer längeren Abblasdauer. Weiter bevorzugt wird die Dimension des nicht vollständig im Zellenbereich auf dem Fördermittel platzierten Stückgutes parallel zur Transportrichtung auf Basis der erzeugten Bilddaten mittels der Steuerung bestimmt.

Gemäß einer weiteren bevorzugten Weiterbildung der Erfindung ist vorgesehen, dass das Verfahren den Schritt Bestimmen einer Form, einer Lage, einer Dimension, eines Verpackungsmaterials, einer Oberflächenbeschaffenheit, und/oder eines Gewichtes des nicht vollständig im Zellenbereich auf dem Fördermittel platzierten Stückgutes umfasst, und dass der Abblasbefehl, unter Berücksichtigung der bestimmten Form, der Lage, der Dimension, des Verpackungsmaterials, der Oberflächenbeschaffenheit und/oder des Gewichtes erzeugt wird. Besonders bevorzugt werden die Form, die Lage, die Dimension, das Verpackungsmaterial, die Oberflächenbeschaffenheit, und/oder das Gewicht des nicht vollständig im Zellenbereich auf dem Fördermittel platzierten Stückgutes auf Basis der Erzeugten Bilddaten mittels der Steuerung bestimmt. Alternativ oder zusätzlich kann vorgesehen sein, dass die Steuerung und/oder die weitere Steuerung Daten betreffend die Form, die Lage, die Dimension, das Verpackungsmaterial, die Oberflächenbeschaffenheit, und/oder das Gewicht des Stückgutes von dem Sortiersystem empfängt. Beispielsweise kann vorgesehen sein, dass mittels des Scanners des Sortiersystems, der die die Endstelle bestimmende Adresse und/oder der den die Endstelle bestimmenden Code des Stückgutes erfasst, zugleich eine Gewichtsklasse des Stückgutes ausgelesen wird. Diese Gewichtsklasse kann als Gewicht des Stückgutes an die Steuerung und/oder die weitere Steuerung gesendet werden und beim Erzeugen des Abblasbefehls berücksichtigt werden.

Insbesondere im Hinblick auf ein präzises Abblasen ist gemäß einer weiteren Weiterbildung der Erfindung vorgesehen, dass das Verfahren den Schritt Empfangen eines Taktsignals des Sortiersystems umfasst, und dass die Bilddaten unter Berücksichtigung des empfangenen Taktsignals erzeugt werden und/oder dass der Abblasbefehl, bevorzugt der Blaszeitpunkt, unter Berücksichtigung des empfangenen Taktsignals erzeugt wird. Bevorzugt wird das Taktsignal von der Steuerung und/oder weiteren Steuerung empfangen. Bevorzugt erzeugt also das Sortiersystem das Taktsignal, besonders bevorzugt mittels sortiersysteminterner Sensoren, wie beispielsweise Lichtschranken. Weiter bevorzugt widerspiegelt das Taktsignal die Ist-Fördergeschwindigkeit des Fördermittelts. Beispielweise kann vorgesehen sein, dass sich ein Logikpegel des Taktsignals ändert, jedes Mal, wenn ein bestimmter Bestanteil des Fördermittels an einem Sensor des Sortiersystems vorbeizieht. Das Taktsignal wird also bevorzugt zur zeitlichen Koordination und/oder Synchronisation zwischen dem Fördermittel und der Abblaseinrichtung und insbesondere zur Koordination zwischen dem Fördermittel und der Kamera und/oder der Abblasvorrichtung verwendet. Zudem kann das Taktsignal bevorzugt der Steuerung und/oder der weiteren Steuerung beim Erzeugen des Abblasbefehls als Referenz dienen. Entsprechend ist eine zielgenauere Abblasung von fehlplatzierten Stückgütern möglich, was wiederum die Lärmbelästigung durch das Abblasen verringert und/oder die Quote der erfolgreichen Abblasungen erhöht. Besonders bevorzugt wird das Taktsignal beim Erzeugen der Bilddaten mittels der an der Förderstrecke angeordneten Kamera, berücksichtigt. Derart lässt sich also die Bildwiederholrate auf die aktuelle Fördergeschwindigkeit des Fördermittels anpassen. Bevorzugt werden also genau dann Bilddaten erzeugt, wenn das Fördermittel sich derart vor der Kamera befindet, dass die mittels der Kamera erzeugten Bilddaten dazu geeignet sind, nicht vollständig im Zellenbereich platzierte Stückguter darauf zu erkennen.

Gemäß einer weiteren bevorzugten Weiterbildung ist vorgesehen, dass die Abblasvorrichtung eine Mehrzahl von Druckluftdüsen umfasst, wobei die Mehrzahl der Druckluftdüsen in Transportrichtung nebeneinander angeordnet sind, wobei das Verfahren den Schritt Bestimmen einer Form, einer Lage, einer Dimension, eines Verpackungsmaterials, einer Oberflächenbeschaffenheit, und/oder eines Gewichtes des nicht vollständig im Zellenbereich auf dem Fördermittel platzierten Stückgutes umfasst, und wobei der Abblasbefehl unter Berücksichtigung der bestimmten Form, Lage, Dimension, Verpackungsmaterials, Oberflächenbeschaffenheit und/oder Gewichtes derart für die Mehrzahl an Druckluftdüsen erzeugt wird, dass mit einer möglichst kurzen Gesamtblasdauer das Stückgut vom Fördermittel entfernbar ist und/oder entfernt wird.

Bevorzugt wird die Form, die Lage, die Oberflächenbeschaffenheit, und/oder das Gewicht des nicht vollständig im Zellenbereich auf dem Fördermittel platzierten Stückgutes auf Basis der erzeugten Bilddaten mittels der Steuerung bestimmt. Alternativ oder zusätzlich kann vorgesehen sein, dass die Steuerung Daten betreffend die Form, die Lage, die Oberflächenbeschaffenheit, und/oder das Gewicht des Stückgutes von dem Sortiersystem empfängt. Weiter bevorzugt ist unter Gesamtblasdauer diejenige Zeitdauer zu verstehen, für die eine oder mehrere Druckluftdüsen betrieben werden. Wird beispielsweise eine erste von zwei Druckluftdüsen mit der Blasdauer *a* betrieben und eine zweite Druckluftdüsen mit der Blasdauer *b* betrieben, wobei *b > a* gilt, und beide Druckluftdüsen zum selben Abblaszeitpunkt betrieben werden, beträgt die Gesamtblasdauer *b*. Werden die Druckluftdüsen allerdings zeitlich hintereinander betrieben, derart dass kein Zeitpunkt existiert, bei dem beide Druckluftdüsen gleichzeitig betrieben werden, beträgt die Gesamtblasdauer *a + b.* Eine Reduzierung der Gesamtblasdauer ist insbesondere im Hinblick auf die Lärmbelästigung von Vorteil. Entsprechend ist es vorteilhafter, mehrere Druckluftdüsen gleichzeitig zu betreiben als hintereinander.

Gemäß einer weiteren bevorzugten Weiterbildung der Erfindung ist vorgesehen, dass das Sortiersystem eine an der Förderstrecke angeordnete Beladekontrollvorrichtung zum Bestimmen einer Lage des im Zellenbereich auf dem Fördermittel angeordneten Stückgutes umfasst, und dass das Verfahren den Schritt Empfangen einer Beladungsmeldung der Beladekontrollvorrichtung durch die Steuerung umfasst, wobei der Schritt Erzeugen von Bilddaten mittels der an der Förderstrecke angeordneten Kamera ein Berücksichtigen der Beladungsmeldung umfasst und/oder wobei der Schritt Erkennen eines nicht vollständig im Zellenbereich auf dem Fördermittel platzierten Stückgutes auf Basis der erzeugten Bilddaten ein Berücksichtigen der Beladungsmeldung umfasst. Das Erkennen von nicht vollständig im Zellenbereich auf dem Fördermittel angeordneten Stückgütern kann dahingehend verbessert werden, dass die Steuerung eine Vorwarnung - die Beladungsmeldung - durch die Beladekontrollvorrichtung des Sortiersystems empfängt. Die Vorwarnung kann beispielsweise dazu führen, dass eine Bildwiederholrate der Kamera in den Zeiträumen, in denen kein fehlplatziertes Stückgut erwartet wird gesenkt wird, wodurch sich Energie und Ressourcen sparen lassen. Alternativ oder zusätzlich kann die Vorwarnung dazu führen, dass Rechenressourcen beim Schritt des Erkennens des nicht vollständig im Zellenbereich auf dem Fördermittel platzierten Stückgutes auf Basis der erzeugten Bilddaten, gezielt für Bilddaten verwendet werden, bei denen ein fehlplatziertes Stückgut erwartet wird. Derart lassen sich Rechenressourcen einsparen und/oder die Erkennung von fehlplatzierten Stückgütern verbessern.

Weiterhin ist im Hinblick auf die Bilddaten gemäß einer bevorzugten Weiterbildung der Erfindung vorgesehen, dass das Verfahren die folgenden Schritte umfasst
- Vergleichen der mittels der Steuerung als nicht vollständig im Zellenbereich auf dem Fördermittel platzierten Stückgütern erkannten Stückgütern, mit von der Steuerung als vollständig im Zellenbereich auf dem Fördermittel platzierten Stückgütern erkannten Stückgütern, mittels der Steuerung und/oder
- Erkennen von Gemeinsamkeiten zwischen denjenigen Stückgütern, die mittels der Steuerung als nicht vollständig im Zellenbereich auf dem Fördermittel platzierten Stückgütern erkannt wurden, mittels der Steuerung.

Derart können also Eigenschaften der Stückgüter identifiziert werden, die besonders häufig dazu führen, dass Stückgüter fehlplatziert sind. Wenn sich derart beispielsweise herausstellt, dass gewisse Eigenschaften der Stückgüter zu einer hohen Fehlplatzierungsquote führen, kann diese Information beispielsweise dazu verwendet werden, dass Stückgüter, die diese Eigenschaften aufweisen der manuellen Sortierung zugeführt werden und das Sortiersystem nicht belasten.

Zudem können die Bilddaten nicht nur hinsichtlich der Eigenschaften der Stückgüter ausgewertete werden, sondern auch im Hinblick auf fehleranfällige und/oder defekte Zellenbereiche. In diesem Zusammenhang ist gemäß einer weiteren bevorzugten Weiterbildung der Erfindung vorgesehen, dass die Förderstrecke als Rundstrecke ausgestaltet ist, und dass das Verfahren den Schritt
- Identifizieren von Zellenbereichen des Fördermittels, bei denen mittels der Steuerung ein nicht vollständig im Zellenbereich auf dem Fördermittel platziertes Stückgut erkannt wurde, auf Basis der Bilddaten, mittels der Steuerung
umfasst. Fehleranfällige und/oder defekte Zellenbereiche können also durch Auswertung der Bilddaten erkannt werden. Entsprechend können durch Reparatur und/oder Austausch dieser Zellenbereiche Kapazitätseinbußen des Sortiersystems verringert werden.

Gemäß einer weiteren bevorzugten Weiterbildung umfasst das Verfahren den Schritt
- Abblasen aller auf dem Fördermittel platzierten Stückgütern mittels der Abblasvorrichtung.

Bei einer anstehenden Reparatur und/oder einem geplanten Stillstand des Sortiersystems können im Vorfeld des Abstellens des Fördermittels alle Stückgüter mittels der Abblasvorrichtung vom Fördermittel entfernt werden. Derart kann das bisher praktizierte manuelle Absammeln der Stückgüter ersetzt werden, was Kosten einspart.

Wie bereits erwähnt betrifft die Erfindung auch die Abblaseinrichtung zum Entfernen des Stückgutes von dem Fördermittel des Sortiersystems, wobei die Abblaseinrichtung die Kamera, die Steuerung und/oder die weitere Steuerung, und die Abblasvorrichtung umfasst und wobei die Abblaseinrichtung dazu eingerichtet ist, das oben beschriebene Verfahren durchzuführen. Die Abblaseinrichtung kann grundsätzlich unabhängig von dem Sortiersystem betrieben werden. Alternativ kann das Sortiersystem Daten, wie beispielsweise das Taktsignal, die Beladungsmeldung und/oder eine Gewichtsklasse des Stückgutes an die Abblaseinrichtung und insbesondere an die Steuerung und/oder die weitere Steuerung der Abblaseinrichtung senden, wobei die Steuerung und/oder weitere Steuerung bevorzugt diese Daten beim Erzeugen des Abblasbefehls mitberücksichtigt.

Weiterer technische Merkmale und Vorteile der Abblaseinrichtung und des Sortiersystems erschließen sich dem Fachmann aus der Beschreibung des Verfahrens zum Entfernen des Stückgutes, sowie aus der Beschreibung des Sortiersystems.

### Kurze Beschreibung der Zeichnungen

Nachfolgend wird die Erfindung unter Bezugnahme auf die anliegenden Zeichnungen anhand eines bevorzugten Ausführungsbeispiels näher erläutert.

In den Zeichnungen zeigt
- Fig. 1: eine schematische Darstellung eines Sortiersystems zum Sortieren von Stückgütern umfassend ein Fördermittel zum Fördern des Stückgutes und eine Abblaseinrichtung, gemäß einem bevorzugten Ausführungsbeispiel der Erfindung,
- Fig. 2: eine schematische Darstellung eines Carriers des Sortiersystems aus Figur 1.

### Detaillierte Beschreibung des Ausführungsbeispiels

Das beschriebene Ausführungsbeispiel ist lediglich ein Beispiel, das im Rahmen der Ansprüche auf vielfältige Weise modifiziert und/oder ergänzt werden kann.

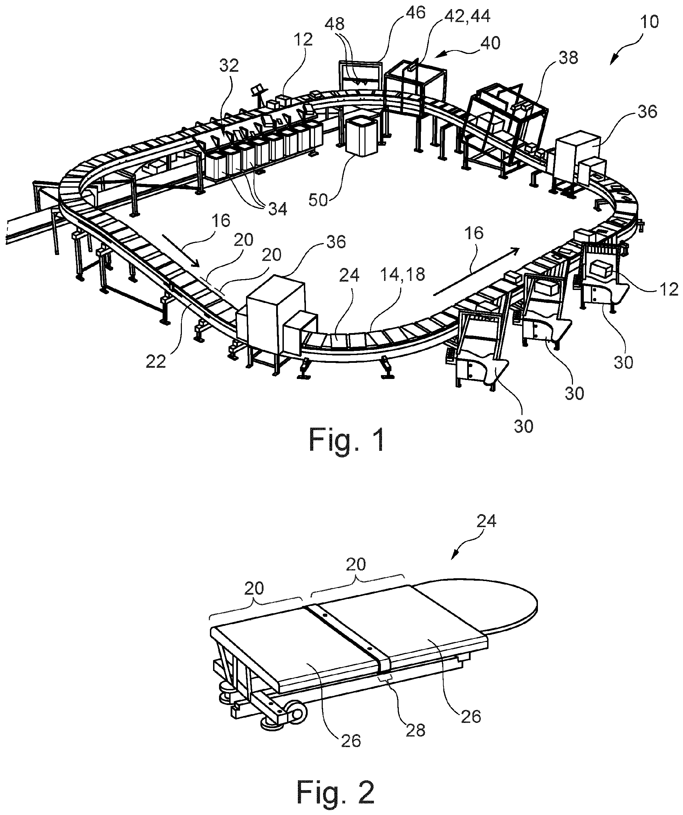

Figur 1 zeigt eine schematische Darstellung eines Sortiersystems 10 zum Sortieren von Stückgütern 12. Das Sortiersystem 10 umfasst ein Fördermittel 14 zum Fördern der Stückgüter 12 in eine Transportrichtung 16 entlang einer Förderstrecke 18. Das Fördermittel 14 ist derart ausgestaltet, dass ein in einem Zellenbereich 20 auf dem Fördermittel 14 angeordnetes Stückgut 12 senkrecht zu der Transportrichtung 16 bewegbar ist.

Vorliegend ist das Fördermittel 14 als Quergurtsorter 14 ausgestaltet. Das Fördermittel 14 weist ein Führungssystem 22 auf, das mehrere, grundsätzlich frei konfigurierbare Segmente für Geraden, Kurven, Steigungen und Gefälle umfasst. Vorliegend sind die Segmente derart kombiniert, dass die Förderstrecke 18 als Rundkurs ausgestaltet ist. Die Stückgüter 12 werden vom Quergurtsorter 14 mittels einer Vielzahl an aneinandergereihten Förderwägen 24 - auch Carrier 24 genannt - entlang der Transportrichtung 16 auf dem Führungssystem 22 bewegt.

Figur 2 zeigt einen einzelnen Carrier 24 des in Figur 1 dargestellten Sortiersystems 10. Wie aus Figur 2 ersichtlich, weist jeder Carrier 24 vorliegend zwei Quergurte 26 auf, die jeweils mit einem Stückgut 12 beladen werden können, und den Zellenbereich 20 definieren. Stückgüter 12, die nichtvollständig im Zellenbereich 20 angeordnete sind, und insbesondere Stückgüter 12, die im Zwischenzellenbereich 28 zwischen zwei Quergurten 26 angeordnet sind, können vom Quergurt 26 nicht mehr senkrecht zur Transportrichtung 16 bewegt werden. Dies führt dazu, dass beide an den Zwischenzellenbereich 28 angrenzende Zellenbereiche 20 blockiert sind. Außerdem können nicht vollständig in dem Zellenbereich 20 auf dem Fördermittel 14 platzierte Stückgüter 12 - also fehlplatzierte Stückgüter 12 - verloren gehen oder falsch sortiert werden.

Weiterhin umfasst das Sortiersystem 10, wie in Figur 1 ersichtlich, mehrere an der Förderstrecke angeordnete Einschleusvorrichtungen 30 zum Beladen des Fördermittels 14 mit den Stückgütern 12 und eine Ausschleusvorrichtung 32 umfassend eine Mehrzahl an Endstellen 34 zum Ausschleusen der Stückgüter 12 auf entsprechende Endstellen 34. Endstellen 34 sind Behälter 34, die für einen Ziellandkreise, in die ein entsprechendes Stückgut 12 transportiert werden soll, stehen.

Nachdem das Fördermittel 14 mittels der Einschleusvorrichtung 30 mit einem Stückgut 12 beladen wird, überprüft eine an der Förderstrecke 18 angeordnete Beladekontrollvorrichtung 36 des Sortiersystems 10, ob und in welcher Ausrichtung ein Stückgut 12 auf dem Zellenbereich 20 liegt. Auf Basis dieser Information kann ein Scanner 38 des Sortiersystems 10 einen Aufkleber des Stückgutes 12 erfassen und ermitteln, in welche Endstelle 34 das entsprechende Stückgut 12 sortiert werden soll. Sobald das Stückgut 12 auf Höhe der endsprechenden Endstelle 34 angelangt ist, wirft der Quergurt 26 das Stückgut 12 in die vorgesehene Endstelle 34 ab.

Um fehlplatzierte Stückgüter 12 von dem Fördermittel 14 zu entfernen, weist das in Figur 1 gezeigte Sortiersystem 10 eine Abblaseinrichtung 40 umfassend eine Kamera 42, eine Steuerung 44 und eine Abblasvorrichtung 46 auf.

Die Abblasvorrichtung 46 umfasst vorliegend eine Mehrzahl an mit Magnetventilen ausgerüstete Druckluftdüsen 48. Die Magnetventile - vorliegend das Magnetventil-Modell MN1H-2-3/4-MS der Firma Festo - werden über eine Druckluftanlage mit Druckluft bei 6 bar Betriebsdruck versorgt. Die Magnetventile sind kommunikationstechnisch mit der Steuerung 44 verbunden und öffnen sich gemäß einem Abblasbefehl der Steuerung 44 und lassen die Druckluft für eine durch den Abblasbefehl bestimmte Blasdauer durch die Druckluftdüsen 48 passieren. Als Druckluftdüsen 48 werden vorliegend die Druckluftdüsen-Modelle 600.385.35.AL.00.0 der Firma Lechler verwendet.

Die Kamera 42 stellt die Sensorik der Abblaseinrichtung 40 dar, wobei vorliegend das Modell Checker 4G7 der Firma Cognex verwendet wird. Ein Schaltschrank (nicht in den Figuren gezeigt) mit einem Haupt- und einem Steuerstromkreis versorgt die Magnetventile, die Kamera 42 und die Steuerung 44 mit Strom und sorgt für die Übertragung des Abblasbefehls an die Magnetventile.

Die Abblaseinrichtung 40 ist dazu ausgestaltet, das im folgenden beschriebene Verfahren zum Entfernen eines Stückgutes 12 von dem Fördermittel 14 des Sortiersystems 10 durchzuführen:
In einem ersten Schritt des Verfahrens werden mittels der an der Förderstrecke 18 angeordneten Kamera 42 Bilddaten erzeugt. Die Kamera 42 ist vorliegend derart an der Förderstrecke 18 angeordnet, dass Bilddaten erzeugt werden, die wenigstens das Fördermittel 14 in einem Abschnitt der Förderstrecke 18 repräsentieren. Zudem ist die Kamera 42 vorliegend über dem Fördermittel 14 platziert und erfasst das Fördermittel 14 von oben.

In einem weiteren Schritt des Verfahrens wird ein nicht vollständig im Zellenbereich 20 auf dem Fördermittel 14 platziertes Stückgut 12 auf Basis der erzeugten Bilddaten mittels der Steuerung 44 erkannt. Vorliegend ist jener Teil der Steuerung 44, der die Bilddaten auswertet, direkt in die Kamera 42 integriert. Sobald der Zwischenzellenbereich 28 auf den Bilddaten von der Steuerung 44 erkannt wird, überprüft die Steuerung 44, ob sich ein Stückgut 12 in dem Zwischenzellenbereich 28 befindet.

Im Falle, dass ein nicht vollständig im Zellenbereich 20 auf dem Fördermittel 14 platziertes Stückgut 12 erkannt wurde, wird in einem weiteren Schritt des Verfahrens von der kameraintegrierten Steuerung 44 ein Signal erzeugt, welches an einen im Schaltschrank (nicht gezeigt) integrierten Teil der Steuerung 44 gesendet wird. Auf Basis dieses Signals wird unter Berücksichtigung des Zeitpunkts des Erzeugens der Bilddaten, der Fördergeschwindigkeit des Fördermittels 14, und der Anordnung der Kamera 42, der Förderstrecke 18 und der Abblasvorrichtung 46 zueinander von der Steuerung 44 der als Schaltsignal ausgestaltete Abblasbefehl erzeugt.

Schlussendlich wird in einem weiteren Schritt des Verfahrens das nicht vollständig im Zellenbereich 20 auf dem Fördermittel 14 platzierte Stückgut 12 auf Basis des Abblasbefehls mittels der Abblasvorrichtung 46 abgeblasen. Der als Schaltsignal ausgestaltete Abblasbefehls wird also zeitverzögert zur Erkennung des fehlplatzierten Stückgutes 12 an das Magnetventil der Abblasvorrichtung 46 übergeben, so dass genau dann abgeblasen wird, wenn sich das Stückgut 12 vor der Druckluftdüse 48 befindet. Das Magnetventil schaltet für die vorgegebene Blasdauer und lässt die Druckluft passieren. Durch die Druckluftdüse 48 wird der Volumenstrom auf das abzublasende Stückgut 12 gerichtet, das in einem Auffangbecken 50 abgefertigt wird.

Im vorliegenden Verfahren wird zudem von der Steuerung 44 ein Taktsignal des Sortiersystems 10 empfangen, das beim Erzeugen des Abblasbefehls berücksichtigt wird. Diese Synchronisation führt zu einer besonders zielgenauen Abblasung.

### Bezugszeichenliste

| | |
|---|---|
| Sortiersystem | 10 |
| Stückgut | 12 |
| Fördermittel, Quergurtsorter | 14 |
| Transportrichtung | 16 |
| Förderstrecke | 18 |
| Zellenbereich | 20 |
| Führungssystem | 22 |
| Förderwagen, Carrier | 24 |
| Quergurt | 26 |
| Zwischenzellenbereich | 28 |
| Einschleusvorrichtung | 30 |
| Ausschleusvorrichtung | 32 |
| Endstelle, Behälter | 34 |
| Beladekontrollvorrichtung | 36 |
| Scanner | 38 |
| Abblaseinrichtung | 40 |
| Kamera | 42 |
| Steuerung | 44 |
| Abblasvorrichtung | 46 |
| Druckluftdüse | 48 |
| Auffangbecken | 50 |

## Patentansprüche

1. Verfahren zum Entfernen eines Stückgutes (12) von einem Fördermittel (14) eines Sortiersystems (10), wobei das Sortiersystem (10) das Fördermittel (14) zum Fördern des Stückgutes (12) in eine Transportrichtung (16) entlang einer als Rundstrecke ausgestalteten Förderstrecke (18) umfasst, und wobei das Fördermittel (14) derart ausgestaltet ist, dass ein in einem Zellenbereich (20) auf dem Fördermittel (14) angeordnetes Stückgut (12) senkrecht zu der Transportrichtung (16) bewegbar ist, umfassend die Schritte
- Erzeugen von Bilddaten mittels einer an der Förderstrecke (18) angeordneten Kamera (42), wobei die Bilddaten wenigstens das Fördermittel (14) in einem Abschnitt der Förderstrecke (18) repräsentieren,
- Erkennen eines nicht vollständig im Zellenbereich (20) auf dem Fördermittel (14) platzierten Stückgutes (12) auf Basis der erzeugten Bilddaten mittels einer Steuerung (44),
- Klassifizieren des nicht vollständig im Zellenbereich (20) auf dem Fördermittel (14) platzierten Stückgutes (12) hinsichtlich einer Eigenschaft des Stückgutes (12), insbesondere einer Form, einer Lage, einer Dimension, eines Verpackungsmaterials, einer Oberflächenbeschaffenheit, und/oder eines Gewichts, auf Basis der erzeugten Bilddaten mittels der Steuerung (44),
- Erzeugen eines Abblasbefehls für eine an der Förderstrecke angeordnete Abblasvorrichtung (46),
- Abblasen des nicht vollständig im Zellenbereich (20) auf dem Fördermittel (14) platzierten Stückgutes (12) auf Basis des Abblasbefehls mittels der Abblasvorrichtung (46),
**dadurch gekennzeichnet, dass** das Verfahren zusätzlich die Schritte
- Überprüfen des Abblasens mittels einer Lichtschranke nach dem Abblasen, und
- Empfangen eines von der Lichtschranke erzeugten Überprüfungssignals,
wobei der Abblasbefehl unter Berücksichtigung eines Zeitpunkts des Erzeugens der Bilddaten, einer Fördergeschwindigkeit des Fördermittels (14), einer Anordnung der Kamera (42), der Förderstrecke (18) und der Abblasvorrichtung (46) zueinander und unter Berücksichtigung des Überprüfungssignals und der Klassifikation des Stückgutes (12) mittels maschinellen Lernens erzeugt wird, umfasst.

2. Verfahren nach Anspruch 1, wobei die Abblasvorrichtung (46) in Transportrichtung (16) derart hinter der Kamera (42) angeordnet ist, dass zwischen dem von den Bilddaten repräsentierten Abschnitt der Förderstrecke (18), und einem Abblasort der Förderstrecke (18) eine Transportzeit durch das Fördermittel (14) von 0,2 Sekunden bis 3 Sekunden liegt, wobei der Abblasort, demjenigen Ort der Förderstrecke (18) entspricht, an dem die Abblasvorrichtung (46) das nicht vollständig im Zellenbereich (20) auf dem Fördermittel (14) platzierte Stückgut (12) abbläst.

3. Verfahren nach einem der vorhergehenden Ansprüche, wobei die Kamera (42) derart an der Förderstrecke (18) angeordnet ist, dass die von der Kamera (42) erzeugten Bilddaten das Fördermittel (14) von oben repräsentieren.

4. Verfahren nach einem der vorhergehenden Ansprüche, wobei die Abblasvorrichtung (46) derart an der Förderstrecke (18) angeordnet ist, dass ein von der Abblasvorrichtung (46) erzeugter Druckluftstoß senkrecht zur Transportrichtung (16) des Fördermittels (14) gerichtet ist und/oder in einer Ebene parallel zu einer Förderebene des Fördermittels (14) liegt.

5. Verfahren nach einem der vorhergehenden Ansprüche, wobei der Abblasbefehl wenigstens einen Blaszeitpunkt und eine Blasdauer umfasst, und wobei der Schritt des Abblasens ein Erzeugen wenigstens eines Druckluftstoßes für die Blasdauer zu dem Blaszeitpunkt mittels der Abblasvorrichtung (46) umfasst.

6. Verfahren nach einem der vorhergehenden Ansprüche, wobei das Verfahren den Schritt Bestimmen einer Dimension des nicht vollständig im Zellenbereich (20) auf dem Fördermittel (14) platzierten Stückgutes (12) parallel zur Transportrichtung (16) umfasst, und wobei der Abblasbefehl, bevorzugt die Blasdauer, unter Berücksichtigung der bestimmten Dimension erzeugt wird.

7. Verfahren nach einem der vorhergehenden Ansprüche, wobei das Verfahren den Schritt Bestimmen einer Form, einer Lage, einer Dimension, eines Verpackungsmaterials, einer Oberflächenbeschaffenheit, und/oder eines Gewichtes des nicht vollständig im Zellenbereich (20) auf dem Fördermittel (14) platzierten Stückgutes (12) umfasst, und wobei der Abblasbefehl, unter Berücksichtigung der bestimmten Form, der Lage, der Dimension, des Verpackungsmaterials, der Oberflächenbeschaffenheit und/oder des Gewichtes erzeugt wird.

8. Verfahren nach einem der vorhergehenden Ansprüche, wobei das Verfahren den Schritt Empfangen eines Taktsignals des Sortiersystems (10) umfasst und wobei die Bilddaten unter Berücksichtigung des empfangenen Taktsignals erzeugt werden und/oder wobei der Abblasbefehl, bevorzugt der Blaszeitpunkt, unter Berücksichtigung des empfangenen Taktsignals erzeugt wird.

9. Verfahren nach einem der vorhergehenden Ansprüche, wobei die Abblasvorrichtung (46) eine Mehrzahl von Druckluftdüsen (48) umfasst, wobei die Mehrzahl der Druckluftdüsen (48) in Transportrichtung (16) nebeneinander angeordnet sind, wobei das Verfahren den Schritt Bestimmen einer Form, einer Lage, einer Dimension, eines Verpackungsmaterials, einer Oberflächenbeschaffenheit, und/oder eines Gewichtes des nicht vollständig im Zellenbereich (20) auf dem Fördermittel (14) platzierten Stückgutes (12) umfasst und wobei der Abblasbefehl unter Berücksichtigung der bestimmten Form, Lage, Dimension, Verpackungsmaterials, Oberflächenbeschaffenheit und/oder Gewichtes derart für die Mehrzahl an Druckluftdüsen (46) erzeugt wird, dass mit einer möglichst kurzen Gesamtblasdauer das Stückgut (12) vom Fördermittel (14) entfernbar ist und/oder entfernt wird.

10. Verfahren nach einem der vorhergehenden Ansprüche, wobei das Sortiersystem (10) eine an der Förderstrecke (18) angeordnete Beladekontrollvorrichtung (36) zum Bestimmen einer Lage des im Zellenbereich (20) auf dem Fördermittel (14) angeordneten Stückgutes (12) umfasst, wobei das Verfahren den Schritt Empfangen einer Beladungsmeldung der Beladekontrollvorrichtung (36) durch die Steuerung (44) umfasst, und wobei der Schritt Erzeugen von Bilddaten mittels der an der Förderstrecke (18) angeordneten Kamera (42) ein Berücksichtigen der Beladungsmeldung umfasst und/oder wobei der Schritt Erkennen eines nicht vollständig im Zellenbereich (20) auf dem Fördermittel (14) platzierten Stückgutes (12) auf Basis der erzeugten Bilddaten ein Berücksichtigen der Beladungsmeldung umfasst.

11. Verfahren nach einem der vorhergehenden Ansprüche, wobei die Förderstrecke (18) als Rundstrecke ausgestaltet ist, und wobei das Verfahren den Schritt Identifizieren von Zellenbereichen (20) des Fördermittels (14), bei denen mittels der Steuerung (44) ein nicht vollständig im Zellenbereich (20) auf dem Fördermittel (14) platziertes Stückgut (12) erkannt wurde, auf Basis der Bilddaten mittels der Steuerung (44) umfasst.

12. Abblaseinrichtung (40) zum Entfernen eines Stückgutes (12) von einem Fördermittel (14) eines Sortiersystems (10), wobei das Fördermittel (14) zum Fördern des Stückgutes (12) in eine Transportrichtung (16) entlang einer Förderstrecke (18) ausgestaltet ist und das Fördermittel (14) weiterhin derart ausgestaltet ist, dass ein in einem Zellenbereich (20) auf dem Fördermittel (14) angeordnetes Stückgut (12) senkrecht zu der Transportrichtung (16) bewegbar ist, wobei die Abblaseinrichtung (40) eine Kamera (42), eine Steuerung (44), eine Lichtschranke und eine Abblasvorrichtung (46) umfasst, und wobei die Abblaseinrichtung (40) dazu eingerichtet ist, ein Verfahren nach einem der vorherigen Verfahrensansprüche durchzuführen.

13. Sortiersystem (10) zum Sortieren von Stückgütern (12) umfassend ein Fördermittel (14) zum Fördern des Stückgutes (12) in eine Transportrichtung (16) entlang einer Förderstrecke (18) und eine Abblaseinrichtung (40) nach dem vorhergehenden Anspruch.

## Claims

1. Method for removing a piece good (12) from a conveying means (14) of a sorting system (10), wherein the sorting system (10) comprises the conveying means (14) for conveying the piece good (12) in a transport direction (16) along a conveyor line (18) configured as a circular line, and wherein the conveying means (14) is configured in such a way that a piece good (12) arranged in a cell area (20) on the conveying means (14) is movable at right angles to the transport direction (16), comprising the steps of
- generating image data by means of a camera (42) arranged on the conveyor line (18), wherein the image data represent at least the conveying means (14) in one section of the conveyor line (18),
- by means of a controller (44), detecting a piece good (12) not placed completely in the cell area (20) on the conveying means (14) on the basis of the image data generated,
- by means of the controller (44), classifying the piece good (12) not placed completely in the cell area (20) on the conveying means (14) with regard to a property of the piece good (12), in particular a shape, a position, a dimension, a packaging material, a surface finish and/or a weight, on the basis of the image data generated,
- generating a blowoff command for a blowoff device (46) arranged on the conveyor line,
- by means of the blowoff device (46), blowing off the piece good (12) not placed completely in the cell area (20) on the conveying means (14) on the basis of the blowoff command,
**characterized in that** the method additionally comprises the steps of
- checking the blowoff by means of a light barrier after the blowoff, and
- receiving a check signal generated by the light barrier,
wherein the blowoff command is generated by means of machine learning while considering a time of the generation of the image data, a conveying speed of the conveying means (14), an arrangement of the camera (42), the conveyor line (18) and the blowoff device (46) relative to one another and while considering the check signal and the classification of the piece good (12).

2. Method according to Claim 1, wherein the blowoff device (46) is arranged after the camera (42) in the transport direction (16), in such a way that between the section of the conveyor line (18) that is represented by the image data and a blowoff location of the conveyor line (18) there is a transport time through the conveying means (14) of 0.2 seconds to 3 seconds, wherein the blowoff location corresponds to that location of the conveyor line (18) at which the blowoff device (46) blows off the piece good (12) not placed completely in the cell area (20) on the conveying means (14).

3. Method according to one of the preceding claims, wherein the camera (42) is arranged on the conveyor line (18) in such a way that the image data generated by the camera (42) represent the conveying means (14) from above.

4. Method according to one of the preceding claims, wherein the blowoff device (46) is arranged on the conveyor line (18) in such a way that a compressed air blast generated by the blowoff device (46) is directed at right angles to the transport direction (16) of the conveying means (14) and/or is located in a plane parallel to a conveying plane of the conveying means (14).

5. Method according to one of the preceding claims, wherein the blowoff command comprises at least one blowing time and a blowing period, and wherein the blowoff step comprises generating at least one compressed air blast for the blowing period at the blowing time by means of the blowoff device (46).

6. Method according to one of the preceding claims, wherein the method comprises the step of determining a dimension of the piece good (12) not placed completely in the cell area (20) on the conveying means (14) parallel to the transport direction (16), and wherein the blowoff command, preferably the blowing period, is generated while considering the determined dimension.

7. Method according to one of the preceding claims, wherein the method comprises the step of determining a shape, a position, a dimension, a packaging material, a surface finish and/or a weight of the piece good (12) not placed completely in the cell area (20) on the conveying means (14), and wherein the blowoff command is generated while considering the determined shape, the position, the dimension, the packaging material, the surface finish and/or the weight.

8. Method according to one of the preceding claims, wherein the method comprises the step of receiving a clock signal of the sorting system (10), and wherein the image data are generated while considering the received clock signal and/or wherein the blowoff command, preferably the blowing time, is generated while considering the received clock signal.

9. Method according to one of the preceding claims, wherein the blowoff device (46) comprises a plurality of compressed air nozzles (48), wherein the plurality of compressed air nozzles (48) are arranged beside one another in the transport direction (16), wherein the method comprises the step of determining a shape, a position, a dimension, a packaging material, a surface finish and/or a weight of the piece good (12) not placed completely in the cell area (20) on the conveying means (14), and wherein the blowoff command is generated while considering the determined shape, position, dimension, packaging material, surface finish and/or weight for the plurality of compressed air nozzles (46) in such a way that the piece good (12) can be removed and/or is removed from the conveying means (14) with the shortest possible total blowing period.

10. Method according to one of the preceding claims, wherein the sorting system (10) comprises a load monitoring device (36) arranged on the conveyor line (18) for determining a position of the piece good (12) arranged in the cell area (20) on the conveying means (14), wherein the method comprises the step of receiving a load message from the load monitoring device (36) by the controller (44), and wherein the step of generating image data by means of the camera (42) arranged on the conveyor line (18) comprises considering the load message and/or wherein the step of detecting a piece good (12) not placed completely in the cell area (20) on the conveying means (14) on the basis of the image data generated comprises considering the load message.

11. Method according to one of the preceding claims, wherein the conveyor line (18) is configured as a circular line, and wherein the method comprises the step of, by means of the controller (44), identifying cell areas (20) of the conveying means (14) in which a piece good (12) not placed completely in the cell area (20) on the conveying means (14) has been detected by means of the controller (44), on the basis of the image data.

12. Blowoff unit (40) for removing a piece good (12) from a conveying means (14) of a sorting system (10), wherein the conveying means (14) is configured for conveying the piece good (12) in a transport direction (16) along a conveyor line (18) and the conveying means (14) is furthermore configured in such a way that a piece good (12) arranged in a cell area (20) on the conveying means (14) is movable at right angles to the transport direction (16), wherein the blowoff unit (40) comprises a camera (42), a controller (44), a light barrier and a blowoff device (46), and wherein the blowoff unit (40) is set up to carry out a method according to one of the preceding method claims.

13. Sorting system (10) for sorting piece goods (12), comprising a conveying means (14) for conveying the piece good (12) in a transport direction (16) along a conveyor line (18) and a blowoff unit (40) according to the preceding claim.

## Revendications

1. Procédé pour enlever une marchandise de détail (12) d'un moyen de transport (14) d'un système de tri (10), dans lequel le système de tri (10) comprend le moyen de transport (14) pour transporter la marchandise de détail (12) dans une direction de transport (16) le long d'une ligne de transport (18) configurée sous la forme d'un circuit fermé, et dans lequel le moyen de transport (14) est configuré de telle sorte qu'une marchandise de détail (12) disposée dans une zone de cellule (20) sur le moyen de transport (14) soit mobile perpendiculairement à la direction de transport (16), le procédé comprenant les étapes consistant à
- générer des données d'image au moyen d'une caméra (42) disposée sur la ligne de transport (18), les données d'image représentant au moins le moyen de transport (14) dans une section de la ligne de transport (18),
- détecter, sur la base des données d'image générées au moyen d'une unité de commande (44), une marchandise de détail (12) qui n'est pas complètement placée dans la zone de cellule (20) sur le moyen de transport (14),
- classer, sur la base des données d'image générées au moyen de l'unité de commande (44), la marchandise de détail (12) qui n'est pas complètement placée dans la zone de cellule (20) sur le moyen de transport (14) en fonction d'une propriété de la marchandise de détail (12), notamment d'une forme, d'une position, d'une dimension, d'un matériau d'emballage, d'un état de surface et/ou d'un poids,
- générer une commande de soufflage pour un dispositif de soufflage (46) disposé sur la ligne de transport,
- souffler, sur la base de la commande de soufflage au moyen du dispositif de soufflage (46), sur la marchandise de détail (12) qui n'est pas complètement placée dans la zone de cellule (20) sur le moyen de transport (14),
**caractérisé en ce que** le procédé comprend en outre les étapes consistant à
- vérifier le soufflage au moyen d'une barrière photoélectrique après le soufflage, et
- recevoir un signal de vérification généré par la barrière photoélectrique,
dans lequel la commande de soufflage est générée par apprentissage automatique en tenant compte d'un instant de génération des données d'image, d'une vitesse de transport du moyen de transport (14), d'une disposition de la caméra (42), de la ligne de transport (18) et du dispositif de soufflage (46) les uns par rapport aux autres, et en tenant compte du signal de vérification et de la classification de la marchandise de détail (12).

2. Procédé selon la revendication 1, dans lequel le dispositif de soufflage (46) est disposé en aval de la caméra (42) dans la direction de transport (16) de telle sorte qu'entre la section de la ligne de transport (18) représentée par les données d'image et un emplacement de soufflage de la ligne de transport (18) s'écoule un instant de transport par le moyen de transport (14) de 0,2 seconde à 3 secondes, dans lequel l'emplacement de soufflage correspond à l'endroit de la ligne de transport (18) où le dispositif de soufflage (46) souffle sur la marchandise de détail (12) qui n'est pas complètement placée dans la zone de cellule (20) sur le moyen de transport (14).

3. Procédé selon l'une quelconque des revendications précédentes, dans lequel la caméra (42) est disposée sur la ligne de transport (18) de telle sorte que les données d'image générées par la caméra (42) représentent le moyen de transport (14) en vue de dessus.

4. Procédé selon l'une quelconque des revendications précédentes, dans lequel le dispositif de soufflage (46) est disposé sur la ligne de transport (18) de telle sorte qu'un jet d'air comprimé généré par le dispositif de soufflage (46) soit dirigé perpendiculairement à la direction de transport (16) du moyen de transport (14) et/ou se trouve dans un plan parallèle à un plan de transport du moyen de transport (14).

5. Procédé selon l'une quelconque des revendications précédentes, dans lequel la commande de soufflage comprend au moins un instant de soufflage et une durée de soufflage, et dans lequel l'étape de soufflage comprend la génération d'au moins un jet d'air comprimé à l'instant de soufflage au moyen du dispositif de soufflage (46).

6. Procédé selon l'une quelconque des revendications précédentes, le procédé comprenant l'étape consistant à déterminer une dimension de la marchandise de détail (12) qui n'est pas complètement placée dans la zone de cellule (20) sur le moyen de transport (14) parallèlement à la direction de transport (16), et dans lequel la commande de soufflage, de préférence la durée de soufflage, est générée en tenant compte de la dimension déterminée.

7. Procédé selon l'une quelconque des revendications précédentes, le procédé comprenant l'étape consistant à déterminer une forme, une position, une dimension, un matériau d'emballage, un état de surface, et/ou un poids de la marchandise de détail (12) qui n'est pas complètement placée dans la zone de cellule (20) sur le moyen de transport (14), et dans lequel la commande de soufflage est générée en tenant compte de la forme, de la position, de la dimension, du matériau d'emballage, de l'état de surface et/ou du poids déterminés.

8. Procédé selon l'une quelconque des revendications précédentes, le procédé comprenant l'étape consistant à recevoir un signal d'horloge du système de tri (10) et dans lequel les données d'image sont générées en tenant compte du signal d'horloge reçu et/ou dans lequel la commande de soufflage, de préférence l'instant de soufflage, est générée en tenant compte du signal d'horloge reçu.

9. Procédé selon l'une quelconque des revendications précédentes, dans lequel le dispositif de soufflage (46) comprend une pluralité de buses à air comprimé (48), dans lequel la pluralité des buses à air comprimé (48) sont disposées les unes à côté des autres dans la direction de transport (16), dans lequel le procédé comprend l'étape consistant à déterminer une forme, une position, une dimension, un matériau d'emballage, un état de surface et/ou un poids de la marchandise de détail (12) qui n'est pas complètement placée dans la zone de cellule (20) sur le moyen de transport (14), et dans lequel la commande de soufflage est générée pour la pluralité de buses à air comprimé (46) en tenant compte de la forme, de la position, de la dimension, du matériau d'emballage, de l'état de surface et/ou du poids déterminés, de telle sorte que la marchandise de détail (12) puisse être enlevée et/ou soit enlevée du moyen de transport (14) avec une durée de soufflage totale aussi courte que possible.

10. Procédé selon l'une quelconque des revendications précédentes, dans lequel le système de tri (10) comprend un dispositif de contrôle de chargement (36) disposé sur la ligne de transport (18) pour déterminer une position de la marchandise de détail (12) disposée dans la zone de cellule (20) sur le moyen de transport (14), le procédé comprenant l'étape de réception par l'unité de commande (44) d'un message de chargement du dispositif de contrôle de chargement (36), dans lequel l'étape consistant à générer des données d'image au moyen de la caméra (42) disposée sur la ligne de transport (18) comprend une prise en compte du message de chargement et/ou l'étape consistant à détecter une marchandise de détail (12) qui n'est pas complètement placée dans la zone de cellule (20) sur le moyen de transport (14) sur la base des données d'image générées comprend une prise en compte du message de chargement.

11. Procédé selon l'une quelconque des revendications précédentes, dans lequel la ligne de transport (18) est configurée sous la forme d'un circuit fermé, et dans lequel le procédé comprend l'étape consistant à identifier des zones de cellule (20) du moyen de transport (14) pour lesquelles une marchandise de détail (12) qui n'est pas complètement placée dans la zone de cellule (20) sur le moyen de transport (14) a été détectée au moyen de l'unité de commande (44), sur la base des données d'image de l'unité de commande (44).

12. Installation de soufflage (40) pour enlever une marchandise de détail (12) d'un moyen de transport (14) d'un système de tri (10), dans lequel le moyen de transport (14) est configuré pour transporter la marchandise de détail (12) dans une direction de transport (16) le long d'une ligne de transport (18) et le moyen de transport (14) est en outre configuré de telle sorte qu'une marchandise de détail (12) placée dans une zone de cellule (20) sur le moyen de transport (14) soit mobile perpendiculairement à la direction de transport (16), dans lequel l'installation de soufflage (40) comprend une caméra (42), une unité de commande (44), une barrière photoélectrique et un dispositif de soufflage (46), et dans lequel l'installation de soufflage (40) est conçue pour mettre en œuvre un procédé selon l'une quelconque des revendications de procédé précédentes.

13. Système de tri (10) pour trier des marchandises de détail (12), comprenant un moyen de transport (14) pour transporter la marchandise de détail (12) dans une direction de transport (16) le long d'une ligne de transport (18) et une installation de soufflage (40) selon la revendication précédente.
